# EUROPEAN PATENT APPLICATION

(11) **EP 1 743 927 A2**
(43) Date of publication of application: **17.01.2007**
(21) Application number: 06014570.3
(22) Date of filing: 13.07.2006
(51) Int. Cl.: C09J 9/00, C09J 201/00, C09J 5/06, C09J 7/02

(54) **Activatable compositions**

(30) Priority: 14.07.2005 US 181381
(71) Applicant: National Starch and Chemical Investment Holding Corporation, New Castle, Delaware 19720 (US)
(72) Inventor: Yuan-Huffman, Qingwen Wendy, Belle Mead New Jersey 08502 (US); Dar, Yadunandan, L., Somerset New Jersey 08873 (US); Xiao, Allison, Belle Mead New Jersey 08502 (US); Shah, Smita, Edison New Jersey 08817 (US); Huang, Dongyun, Bridgewater New Jersey 08807 (US); Eknoian, Michael, Warren New Jersey 07059 (US)
(74) Representative: Held, Stephan

(57) **Abstract**

Polymer dispersion forms a non-tacky film when dry. Under the application of a suitable impulse the morphology of the film is disrupted and the film becomes tacky. The compositions of the invention find use as thermally activated films and coatings, especially pressure sensitive adhesives.

## Description

### FIELD OF THE INVENTION

The invention relates to latent systems that are activated by a suitable predetermined impulse.

### BACKGROUND OF THE INVENTION

Systems designed for "performance on demand" are highly desirable. Such systems are generally storage stable and non-reactive until activated or stimulated by some trigger or overt action.

Pressure sensitive adhesive (PSA) products such as labels, tapes, transfer films and other such articles, for example, are manufactured with a release liner made from silicone-coated paper, polysiloxanes, polyolefins, or other low surface energy polymers that forms a protective removable coating over the adhesive. When adhesion is needed, the release liner is removed, exposing the adhesive and allowing the label, tape or film as the case may be to be adhered to a desired substrate. These pressure sensitive adhesive articles are typically prepared by casting the adhesive onto the release liner and then drying the adhesive to form a tacky film. The film is then laminated to a backing such as, for example, label stock. The product may be precut and stacked, or rolled, and then stored and/or shipped for application by the end user.

The release liner is removed to expose the adhesive surface when the article needs to be applied. Release liners can constitute a significant proportion of the raw material cost in manufacturing such adhesive products. In certain applications the cost of the release liner can be well over 50% of the product. Moreover, after removal of the release liner, it is discarded, adding more waste material to the environment.

There continues a need in the art for materials and methods which allow for targeted performance when suitably activated with stable storage until activation. The invention addresses this need by providing systems wherein a composition's desired property is latent or dormant until activated for use. Encompassed are pressure sensitive adhesive articles that can be manufactured without the use of release liners and other such systems that provide "performance on demand" properties.

### SUMMARY OF THE INVENTION

The invention provides latent systems that are activated by a suitable predetermined impulse (also referred to herein as a trigger).

An embodiment of the invention is directed to a composition having a structured morphology. Upon application of a suitable impulse or trigger, the morphology is altered which leads to a change in property of the composition.

A first embodiment of the invention provides a composition having a structured first morphology and corresponding first property of interest, wherein the first morphology and corresponding first property of interest changes to a second morphology and corresponding desired second property of interest upon exposure to an effective amount of thermal energy. Upon removal of the thermal energy and the composition retains the second morphology and corresponding desired second property.

In one aspect of this first embodiment, the second property is interfacial adhesion. In another aspect of this first embodiment, the first property is lack of interfacial adhesion. In yet another aspect of this first embodiment, the composition further comprises an energy-absorbing agent, e.g., a near infrared absorbing ingredient such as pigment or an organic dye.

In one preferred aspect of this first embodiment, the structured first morphology of the composition comprises a plurality of hydrophobic cores, each core surrounded by a hydrophilic shell. The composition may be in the form of dispersion or in the form of a dry powder. In one aspect the hydrophobic core comprises a low glass transition temperature (Tg) polymer and the hydrophilic shell comprises a high glass transition temperature (Tg) polymer. The core may be an adhesive, such as a pressure sensitive adhesive.

In another preferred aspect of this first embodiment, the structured first morphology of the composition comprises a plurality of hydrophobic cores embedded in a hydrophilic polymer matrix. The composition may be in the form of a film. In one aspect the hydrophobic core comprises a low Tg polymer and the hydrophilic polymer matrix comprises a high Tg polymer. The core material may be an adhesive, such as a pressure sensitive adhesive. In another aspect at least a portion of the hydrophobic cores also comprises an active (e.g., a catalyst, a fragrance, a coloring agent, a biocide or a drug) that is released upon exposure to thermal energy.

A second embodiment of the invention provides a composition in the form of a film having a structured first morphology and corresponding first property of interest, wherein the first morphology and first property are changed to a second morphology and corresponding desired second property of interest upon exposure to an effective amount of thermal energy, and where upon removal of thermal energy, the composition retains the second morphology and corresponding desired second property.

In one aspect of this second embodiment at least one surface of the film exhibits pressure sensitive adhesive properties only after exposure to thermal energy. In a preferred embodiment, the composition, prior to exposure to thermal energy, comprises a plurality of hydrophobic cores embedded in a hydrophilic polymer matrix. The hydrophilic core may desirably comprise a low Tg polymer and the hydrophilic polymer matrix may desirably comprises a high Tg polymer. The core material may be an adhesive, such as a pressure sensitive adhesive. In another aspect of this first embodiment, the composition may further comprise an energy-absorbing agent, e.g., a near infrared absorbing ingredient such as pigment or an organic dye. In yet another aspect at least a portion of the hydrophobic cores also comprises an active (e.g., a catalyst, a fragrance, a coloring agent, a biocide or a drug) that is released upon exposure to thermal energy.

A third embodiment of the invention provides a process for bonding at least a first substrate to at least a second substrate, wherein at least a portion of at least one of the substrates has applied thereon a non-tacky thermally activatable film. The process comprises exposing a non-tacky activatable film that is bonded to at least a portion of a first substrate to thermal energy such that upon exposure of the activatable film to the thermal energy the film is activated to become tacky, the activated tacky film remaining tacky upon removal of thermal energy and at temperatures where the activatable film was non-tacky, and bringing a second substrate in contact with the activated tacky film on the first substrate, thereby bonding the first substrate to the second substrate.

In one aspect of this third embodiment the activatable film has a structured first morphology and corresponding first property of interest, wherein the first morphology and first property are altered by exposure to thermal energy, which exposure leads to activation of the film, which activated film has a second morphology and corresponding desired second property of interest. In one preferred aspect, the first property of interest and the second property differ in degree of tackiness (differ by degree of tack or by the absence of or presence of tack). In one preferred aspect the activatable film comprises a plurality of hydrophobic cores embedded in a hydrophilic polymer matrix. The hydrophilic core may desirably comprise a low Tg polymer and the hydrophilic polymer matrix may desirably comprises a high Tg polymer. The core material may be an adhesive, such as a pressure sensitive adhesive. In another aspect of this first embodiment, the composition may further comprise an energy-absorbing agent, e.g., a near infrared absorbing ingredient such as pigment or an organic dye. In another aspect at least a portion of the hydrophobic cores also comprises an active (e.g., a catalyst, a fragrance, a coloring agent, a biocide or a drug) that is released upon exposure to thermal energy.

A fourth embodiment of the invention provides a process of making a thermally activatable film comprising forming an emulsion of a low Tg hydrophobic polymer and a high Tg hydrophilic polymeric stabilizer, coating the emulsion onto a substrate surface and drying to form a film comprising a plurality of hydrophobic cores embedded in a hydrophilic polymer matrix.

Still further embodiments of the invention are directed to articles of manufacture comprising a composition having a structured first morphology and corresponding first property of interest, wherein the first morphology and first property are altered by exposure to thermal energy, which exposure leads to a second morphology and corresponding desired second property of interest. For example, the first property of interest may be lack of tackiness or adhesiveness and the second property may be tackiness or adhesiveness, e.g., pressures sensitive adhesive properties. Embodiments include articles comprising a backing substrate having coated on at least one surface thereof such a thermally activatable (thermally alterable) composition. Thermally activatable articles and thermally activated articles, e.g., industrial tapes, transfer films, and the like are preferred embodiments of the invention. Thermally activated articles, such as pressure sensitive adhesive labels, films, tapes and the like, are formed by exposing thermally activatable articles to thermal energy. Preferred embodiments include non-tacky labels, films and tapes. Upon exposure to thermal energy, pressure sensitive adhesive labels, films or tapes are produced. Encompassed are articles comprising such labels, films and tapes, such as labeled bottles, as well a, e.g., methods of labeling a bottle are also embodiments of the invention. The label may comprise a transparent substrate such that following activation of the label and application to the bottle, a "no-label" look bottle results.

### DETAILED DESCRIPTION OF THE INVENTION

It has now been discovered that compositions can be prepared so to have a structured morphology. When triggered or activated by a suitable action, the morphology changes, causing a corresponding predetermined change in the property of the composition. Non-limiting examples include non-tacky to tacky, uncured to cured, change in color (one color to different color or different shade of color), change in intensity or presence of fragrance, odor or smell (e.g., non-fragrant to fragrant), non-reactive to reactive, and stable to non-stable.

Morphology is used herein to define a particular form, which is not a mere reversible physical alteration. A structured morphology is one having a defined organization. When transitioning from a first to a second morphology, a change occurs that does not revert back to the first morphology over time or condition. The second morphology is different from the first morphology and may be structured or random.

The invention provides a system wherein a composition's desired property is latent or dormant until activated for use. Such a system allows for the design of systems for "performance on demand". It allows for targeted performance when suitably activated with stable storage until activation.

Compositions of the invention have a structured first morphology and corresponding first property of interest, wherein the first morphology and first property are altered by exposure to an effective amount of thermal energy. Exposure to thermal energy causes a change in morphology and property. Thus, exposure to thermal energy, such a heat, leads to a second morphology and corresponding desired second property of interest. For example, the first property of interest may be lack of tackiness or adhesiveness, also referred to herein as interfacial adhesion, and the second property may be tackiness or adhesiveness, e.g., pressures sensitive adhesive properties.

Interfacial adhesion refers to the presence of an adhesive property at the air film interface of the film, i.e., the power to hold two surfaces together by interfacial adhesive forces or interlocking action.

Thermal energy is defined as any energy source that causes a change, e.g., increase, in the temperature of a substrate (e.g., film) exposed to such source. In particular, a source of energy that causes the substrate to heat up. Thermal energy is used in an amount effective to produce the desired change. An effective amount of thermal energy can be provided in a variety of ways, e.g., by varying the length of time or duration of exposure, by varying the intensity of the exposure, by varying the type of energy used, etc.

A "pressure-sensitive adhesive" (PSA), as used herein, refers to a viscoelastic material which adheres instantaneously to most substrates with the application of slight pressure and remains permanently tacky. A polymer is a pressure sensitive adhesive within the meaning of the term as used herein if it has the properties of a pressure-sensitive adhesive per se or functions as a pressure-sensitive adhesive by admixture with tackifiers, plastizers or other additives.

One preferred embodiment of the invention provides thermally activated compositions and films comprising the compositions. Dried films may be prepared using hydrophobic polymer emulsions stabilized by hydrophilic or amphiphilic polymeric stabilizer. The films are non-tacky until "activated" with heat, i.e., the film becomes and remains tacky. The use of thermally activated polymer pressure sensitive adhesives in the manufacture of labels, tapes, transfer films and the like eliminates the need for release liners. This is because the films are not tacky until activated for application. In general, a film is considered tacky if it is capable of bonding two substrates together upon contact and, optionally, application of pressure.

Hydrophobic is conventionally used to refer to compounds that are "water-hating". Hydrophobic compounds do not dissolve in water, and are usually non-polar. Hydrophilic is conventionally used to refer to compounds that are "water-loving". Hydrophobic compounds have an affinity for water often because of the formation of hydrogen bonds. Amphiphilic substances typically have a hydrophilic, polar, water-soluble group attached to a hydrophobic, non-polar, water-insoluble group in the same molecule. While such terms will generally be used in the conventional sense, use of the terms "hydrophobic" and "hydrophilic" herein together are relative terms. The more hydrophobic component will constitute the core component while the less hydrophobic (referred to herein as amphiphilic or hydrophilic) will make up the shell or matrix component.

Preferred non-tacky activatable films comprise a hydrophobic polymer emulsion stabilized by a hydrophilic polymeric stabilizer. The hydrophobic polymer emulsion may be a low Tg polymer adhesive that is stabilized by a high Tg polymeric stabilizer.

A "low Tg" polymer is defined herein to be a polymer having a Tg of below 20°C. A "high Tg" polymer is defined herein to be a polymer having a Tg of 20°C or higher. By way of example but not limitation, the low Tg polymer may comprise 2-ethylhexyl acrylate, methyl methacrylate, hydroxymethyl acrylate and butyl acrylate and the high Tg polymer may comprise methyl methacrylate, acrylic acid and butyl acrylate.

The invention also encompasses the encapsulation of materials of interest in the film with release upon demand. The change of structure in the morphology would expose the encapsulated phases and lead to the release of any encapsulated actives such as cureatives fragrances, dyes, or encapsulated actives including biologically active substances. A curative, as used herein, refers to a catalytic curing agent, a resin curing initiator, or a polymerization initiator.

In one embodiment, a hydrophobic low Tg PSA composition (also referred to herein as the core component or core particle component) is synthesized in situ in an emulsion stabilized by a higher Tg hydrophilic or amphiphilic polymeric stabilizer. In the emulsion state, the hydrophilic polymer component functions to keep the core particles in a stable dispersed state. As such, the hydrophilic polymer component is referred to herein as a polymeric stabilizer. Following drying, the dried film shows a structured morphology such that the stabilizer forms an encapsulating layer at the film air interface which leads to a non-tacky film. Upon heating, this order is disrupted leading to the pressure sensitive adhesive occupying some, or all, of the film surface, which leads to a tacky adhesive film. This final structure is preserved upon cooling. The use of thermally activated polymer pressure sensitive adhesives in the manufacture of labels, tapes, transfer films and the like eliminates the need for release liners. This is because the films are not tacky until activated for application.

In addition to eliminating the need for a release liner, steps in the production line may be eliminated and application speed can be increased.

The invention provides compositions that may be applied to a substrate and, when ready to use, activated. The invention encompasses thermally activatable and thermally activated film and coatings that may be applied to substrates such as cases and cartons for forming and/or sealing purposes. Activatable articles such as labels for bottling are particularly preferred embodiments of the invention.

The invention provides polymer dispersions comprising a hydrophobic polymer and a polymeric stabilizer. The hydrophobic polymer may be a low Tg polymer adhesive, such as for example low Tg acrylic polymer. The polymeric stabilizer may be a high Tg non-tacky hydrophilic or amphiphilic polymer. The polymeric stabilizer forms an encapsulating layer on the surface of the film rendering the dried film non-tacky.

A dispersion, as used here, means a system containing polymer core particles that are dispersed in a liquid dispersion medium. The polymer particles are stabilized by surfactant(s), other stabilizers, or mixtures thereof. The terms emulsion or latex may alternatively be used to describe such types of dispersions and such terms are used interchangeable herein.

Polymeric dispersions may be prepared as described in Example 2. In general, any liquid medium, typically water and optionally with other liquids such as alcohols and ketones, pyridine and derivatives, may be used as a dispersion medium for polymerization. The polymers used in the invention can be synthesized by a variety of polymerization techniques including free radical polymerization, condensation polymerization, ionic polymerization, metathesis polymerization, ring opening polymerization, as well as other types of processes. A preferred embodiment is synthesis via free radical polymerization. Polymerization initiators, also known as catalysts or initiators, are used as free radical sources to initiate free radical polymerization. Preferred polymerization initiators are free-radical generating agents capable of generating free radicals to initiate polymerization by the use of one or more mechanisms such as photochemical initiation, thermal initiation, redox initiation, degradative initiation, ultrasonic initiation, or the like. Preferably the initiators are selected from azo-type initiators, peroxide type initiators, or mixtures thereof. Examples of suitable peroxide initiators include, but are not limited to, diacyl peroxides, peroxy esters, peroxy ketals, dialkyl peroxides, and hydroperoxides, specifically benzoyl peroxide, deconoyl peroxide, lauroyl peroxide, succinic acid peroxide, cumene hydroperoxide, t-butyl peroxy acetate, 2,2-di (t-butyl peroxy) butane diallyl peroxide), cumyl peroxide, or mixtures thereof. Examples of suitable azo-type initiators include, but are not limited to azobisisobutyronitrile (AIBN), 1,1'-azobis (1-cyclohexane carbonitrile), acid-functional azo-type initiators such as 4,4'-azobis (4-cyanopentanoic acid), a water-soluble initiator, such as 2,2'-Azobis (N,N'-amidinopropane) dihydrochloride or 2,2'-Azobis (N,N'-dimethyleneisobutyramidine) dihydrochloride.

The resulting dispersion comprises particles of a hydrophobic polymer core surrounded by a hydrophilic shell, which particles are dispersed in a continuous liquid medium. Solids levels of the copolymer dispersions typically range from about 5 to about 65 percent by weight, more typically from 10 to 55 percent by weight, even more typically from 15 to 45 percent. Particle size can be controlled by the type and amount of surfactant or stabilizer used as well as during the making and processing of the dispersion. The process can produce polymer having low particle size. The average particle size is preferably from 10 to 10,000 nanometers (nm), more preferably from 25 to 1000 nm, and even more preferably from 100 to 500 nm.

The resulting dispersion may be dried by any conventional method to form agglomerates of particles in the form of a dry powder or may be cast onto a backing substrate and allowed to dry into a film. While conventional drying methods such as for example, air drying, oven drying, freeze drying and the like may be used to dry the compositions of the invention, it will be apparent that care should be taken in selecting the drying conditions and temperatures. Temperatures below the Tg of the higher Tg polymers are preferred. In film-forming embodiments the hydrophilic shell components merge together forming a film comprises a plurality of hydrophobic cores embedded in a matrix of hydrophilic polymer. The dried film shows a structured morphology such that the hydrophilic matrix forms an encapsulating layer at the film air interface (interfacial surface) which leads to a non-tacky film. Upon exposure to thermal energy, this order is disrupted leading to the pressure sensitive adhesive occupying some, or all, of the film surface, which leads to a tacky adhesive film.

When heated to elevated temperatures, i.e., a temperature greater than the Tg of the high Tg polymer, more usually temperature above about 35°C, generally temperatures above about 50°C, typically temperatures of above about 75°C, and to temperature above 100°C, above 150°C and above 200°C or more, the high Tg polymer is displaced from the surface by the low Tg polymer and the surface develops pressure sensitive adhesive properties. The film is now ready for adhesive application. It will be appreciated that the invention eliminates the need for release liners that protect the adhesive until ready for adhesive application.

To enable sufficient storage and transport stability, the compositions of the invention will typically be formulated to activate at temperatures at least 20-30°C higher than the Tg of the polymeric stabilizer. The films are designed as required by the intended end use and environmental conditions so that the morphology remains stable and unchanged at a predetermined storage temperature range, but are activated (morphology is altered and corresponding property change occurs) at a predetermined elevated temperature.

Activation will typically be complete in less than 3 minutes, more desirably less than about 1 minute, and more typically less than 30 seconds, usually less than 5 seconds, more desirable less than 1 second, down to about 0.1 second or less. Activation speeds are sufficiently fast to enable the films of the invention to be used to adhere or fix labels to bottles using a high speed bottle labeler. It will be appreciated that time to activate will depend on the thickness of the film, the formulation of the film, the source and duration of thermal energy used for activation, and the desired end use application.

Thus, the polymer dispersion dries to form a film that has structured morphology with the morphology changing with temperature to lead to a change in the film properties. The polymer dispersion dries to form a non-tacky film, which becomes tacky upon heating and remains tacky upon cooling. Such adhesives open up the possibility of the elimination of release liners. This is because the films are not tacky until activated for application.

The invention also encompasses the encapsulation of materials of interest in the film with release upon demand. The change of structure in the morphology would expose the encapsulated phases and lead to the release of any encapsulated actives such as catalysts, fragrances, dyes, and biologically active substances including drugs, enzymes, vitamins and the like. In one embodiment, the hydrophilic matrix may surround and encapsulate a cureative or the like. For example, the system may comprise a cureative in the core that is encapsulated within the matrix. Upon exposure to a suitable trigger the curing agent is expelled, allowing for cure.

Embodiments of the invention include multi-particle systems wherein a dispersion comprises two or more different core/shell structures. Such systems may be made by blending two or more emulsions comprising different core and/or shell components For example, reactive core components may be isolated from another by encapsulating or surrounding such components within a shell. Upon casting into a film, the reactive components are isolated from one another within the hydrophilic matrix. Upon exposure to thermal energy, the matrix is disrupted and the components expelled and allowed to react. Such films may be prepared, for example, by blending two or more different dispersions.

In a preferred embodiment, a non-tacky thermally activatable film has a structured morphology that comprises embedded hydrophobic cores surrounded by hydrophilic polymer matrix. Activation is triggered by exposure to thermal energy. When heated the hydrophilic matrix diffuses into the core material, i.e., the core and matrix mix, to form a tacky composition. In this embodiment, the resulting film has a random morphology and a distinctly different property, i.e., adhesiveness.

Films may be prepared that are from about 0.004 mil (100nm) to about 10 mil in thickness, more generally from about 0.01 mil to about 5 mil, even more typically from about 0.1 mil to about mil 3 mil. It will be appreciated that a film may, if desired, may be cast with a thickness of single layer of the core and shell.

The compositions of the invention may be activated by heat, forced air, flame, by heat seal application, near infra-red (NIR) lamp, laser, and the like. Sources of thermal energy are well know and familiar to skilled practitioners.

When using a NIR energy source, the time to activate may advantageously be accelerated by incorporation into the core polymer of an effective amount of a NIR absorber. The energy-absorbing ingredient selected for use may be dissolved and/or dispersed within the adhesive composition. Pigments and organic dyes are particularly useful energy-absorbing ingredients for use in the practice of the invention. Near infrared absorbing dyes and pigments are particularly preferred for use in the practice of the invention, but the invention is not limited thereto.

It will be appreciated that NIR energy intensity may be controlled to control the speed of activation by, e.g., controlling the number and/or the power intensity of the lamps used. Of course other NIR energy sources such as NIR lasers may alternatively be used.

Energy-absorbing ingredients contemplated for use in the practice of the invention are commercially available and include, but are not limited to dyes, pigments and fillers. Examples include carbon black, graphite, Solvent Red (2',3-dimethyl-4-(2-hydroxynaphthylazo)azo-benzene), Solvent Green, dyes such as Forest Green and Royal Blue masterbatch dye available from Clariant, cyanine-based dyes, oxides such as such as titanium dioxide, and metals such as antimony, tetrakis)dialkylaminophenyl)aminium dyes, cyanine dyes, squarylium dyes and the like.

Pigments, such as carbon black and graphite, are particulate in nature and will usually have somewhat of a spherical shape with average particle sizes in the range of about 0.01 to about 7 microns. Pigment particles aggregate, so aggregate size will be larger. The pigment aggregate size in hot melt adhesives will preferably be smaller than about 500 microns. Aggregate sizes of less than about 100 microns are preferred, more preferably smaller than about 50 microns.

A wide variety of organic NIR triggers are described in the literature and are available for use in the practice of the invention. Such compounds include cyanine, metal complexes, quinone, azo, radical multiphenylmethane, perylene, aromatic annulenes, fluorenylium. Such triggers possess various absorption characteristics. For example, halogen substituted 1,4,5,8-tetraanilioanthraquinones have excellent transmittance in the vicinity of 860 nm and can absorb NIR in other ranges. Another example is squaraine, which is characterized by intense narrow absorption bands at relatively long wavelength. Also specifically designed phthalocyanine compounds have been demonstrated exhibiting high transmittance to visible light and offering high efficient cut of near infrared.

Preferred energy-absorbing ingredients for use in the practice of the invention are broad band near IR absorbers such as Epolight 1125 (Epolene, Inc), SDA6248 (H.W. Sands Corp.), SDA2072 (H.W. Sands Corp.) and carbon black. Carbon black can be purchased from Cabot under trade name of Monarch, Regal, Black Pearl, and Elftex, or Degussa (FW series), or from Columbian Chemical Company (Raven Series). Carbon black can be manufactured by different methods such as the furnace black method, the gas (channel) black method, and the lamp black method. The key parameters affecting the radian energy absorption of carbon black prepared by these various methods are average primary particle size, surface chemistry and aggregate structure.

Energy absorbing ingredients for use in the practice of the invention will typically have an absorption in the range of from about 400 nm to about 100,000 nm, more preferably from about 700 nm to about 10,000 nm, even more preferably from about 750 nm to about 5000 nm.

In one preferred embodiment, the core is a low Tg polymer. The low Tg polymer will preferably have a Tg of below 20 °C, more preferably a Tg of less than 10°C, even more preferably less than -20°C, down to about -60°C or lower, down to about -100°C or lower.

Core materials may be formulated using any base polymer suitable for use in formulating adhesives, as are well known to those skilled in the art. Such polymers include amorphous polyolefins, ethylene-containing polymers and rubbery block copolymers, as well as blends thereof. Adhesive compositions based on acrylic copolymers, ethylene/vinyl acetate copolymers, polysiloxans, isotactic or atactic polypropylene, styrene-butadiene, styrene-isoprene, or styrene-ethylene-butylene A-B-A or A-B-A-B block copolymers or mixtures thereof may be used. Preferred embodiments include acrylic, vinyl-acrylic, styrene-acrylic, rubber-based and styrene-rubber based polymer systems.

Acrylic PSA polymers contemplated for use in the practice of the invention may be any acrylate polymers used in the formulations of adhesives. Acrylate polymers is used herein to refer to polymers made from monomers that are based on acrylic or methacrylic acid, and esters thereof including alkyl esters. The polymers will typically be formed of acrylate monomers of one or more low Tg alkyl acrylates. Low Tg monomers are those having a Tg of less than about 0°C. Preferred alkyl acrylates which may be used to practice the invention have up to about 18 carbon atoms in the alkyl group, preferably from about 4 to about 10 carbon atoms in the alkyl group. Alkyl acrylates for use in the invention include butyl acrylate, amyl acrylate, hexyl acrylate, 2-ethylhexyl acrylate, isooctyl acrylate, decyl acrylate, dodecyl acrylates, isomers thereof, and combinations thereof.

The monomer system used to make the acrylic polymer could be solely based on low Tg alkyl acrylate ester monomers, but may be modified by inclusion of high Tg monomers, such as methyl acrylate, ethyl acrylate, isobutyl methacrylate, and/or vinyl acetate, and/or functional comonomers, most preferably, hydroxy-containing functional monomers such as hydroxy ethyl acrylate. Hydroxy functional monomers such as hydroxyalkyl (meth)acrylate esters, and acrylic polymers used are preferably acrylic ester/hydroxy (meth)alkyl ester copolymers. Specific examples of hydroxy functional monomers include hydroxyethyl acrylate, hydroxypropyl acrylate, hydroxyethyl methacrylate and hydroxypropyl methacrylate.

Other comonomers can be used to modify the Tg of the acrylic polymer, to further enhance adhesion to various surfaces and/or to further enhance high temperature shear properties. Such comonomers include N-vinyl pyrrolidone, N-vinyl caprolactam, N-alkyl (meth)acrylamides such as t-octyl acrylamide, cyanoethylacrylates, diacetoneacrylamide, N-vinyl acetamide, N-vinyl formamide, glycidyl methacrylate and allyl glycidyl ether.

The acrylic polymer may also comprise a crosslinking agent. Non-limiting examples of useful crosslinkers include multi-functional acrylates, compounds with multiple vinyl functionality, organo-silane crosslinkers such as alkoxy-silanes with vinyl or acrylic functionality, molecules with multiple functionality including glycidyl, amine, cyano, alcohol, carboxylic acid, isocyanate, and combinations thereof.

The monomer proportions of the acrylic polymer are adjusted in such a way that the polymer has a glass transition temperature of less than about 20°C, typically less than about - 20°C, preferably from about -30°C to about -70°C.

The polymer of the invention may be prepared by conventional polymerization methods familiar to those of skill in the art. These methods include, without limitation, solution polymerization, suspension polymerization and bulk polymerization.

The adhesive compositions of this invention may be tackified. The tackifying resin will normally be present at a level of 5 to 50% by weight of the adhesive composition and preferably at a level of about 10 to 40% by weight of the adhesive composition. The formulated adhesive may also include diluents, emollients, plasticizers, antioxidants, opacifiers, fillers, such as clay and silica, pigments and mixtures thereof, preservatives, as well as other components or additives.

In one embodiment, the low Tg polymer adhesive comprises an acrylic polymer comprising 2-ethylhexyl acrylate (2-EHA), methyl methacrylate (MMA), 2-hydroxyethyl acrylate (2-HEA) and butyl acrylate (BA).

While acrylic polymers-based adhesives are described and exemplified herein, it is to be understood that the invention is not to be so limited. Epoxy-based adhesives, for example, may be used in the practice of the invention and are particularly well suited for electronic applications.

Polymeric stabilizers include, but are not limited to polyvinyl alcohols, and amphiphilic block copolymer stabilizers. Polymeric stabilizers include but are not limited to, poly(maleic acid) and copolymers of maleic acid with compatible ethylenically unsaturated monomers such as mono- and diesters of maleic acid, (meth)acrylic acid, alkyl esters of (meth)acrylic acid, hydroxyalkyl esters of (meth)acrylic acid, alpha-methyl styrene, styrene, and derivatives thereof, vinyl acetate, crotonic acid, esters of crotonic acid, and acrylamide, and derivatives thereof. Other suitable linear polymeric stabilizers include, but are not limited to, polystyrene sulfonates, which are typically obtained by sulfonating poly(styrene) or copolymers of styrene with compatible ethylenically unsaturated monomers including, but not limited to, (meth)acrylic acid, esters of (meth)acrylic acid, maleic acid, and mono- and diesters of maleic acid; condensates including but not limited to naphthalenesulfonic acid-formaldehyde condensate and melamine-formaldehyde condensate. Certain natural or naturally derived polymers useful in the present invention include but are not limited to tannins, lignins, lignosulfates, alginates, dispersed or soluble starches and modified starches, and cellulosic polymers. A mixture of one or more surfactants, stabilizers, dispersants, or a combination of surfactants and stabilizers is also useful in the invention. Non-polymeric stabilizers or surfactants that show lower preference for a film-air interface as compared to the core material may also be used in the practice of the invention. Stabilizers useful in the practice of the invention include amphiphilic surfactants, polymeric surfactants, oligomeric surfactants, anionic surfactants, and the like. Also useful are polyvinyl alcohols and surfactants containing ethylene oxide segments. Use of a hydrophilic polymer stabilizer is one preferred embodiment.

Preferred stabilizers are copolymers of monomers that are water and/or oil soluble. The stabilizer can be tailored to be hydrophilic or amphiphilic based on the ratio of the monomers used. Stabilizers comprising high Tg polymers are particularly preferred embodiments of the invention. The monomer proportions of the polymeric stabilizer are adjusted in such a way that the polymer has a glass transition temperature greater than about 20°C Particularly preferred high Tg polymers are those having a Tg greater that about 50°C, more preferably about 70°C or more. Polymers having a Tg of from about 55-150°C are particularly preferred for use in the practice of the invention.

The polymeric stabilizer may comprise one or more functional monomers. Preferred are carboxy and/or hydroxy functional monomers. Useful carboxylic acids preferably contain from about 3 to about 5 carbon atoms and include, among others, acrylic acid, methacrylic acid, itaconic acid, and the like. Acrylic acid, methacrylic acid and mixtures thereof are particularly preferred. Examples of hydroxy functional monomers include hydroxyethyl acrylate, hydroxypropyl acrylate, hydroxyethyl methacrylate and hydroxypropyl methacrylate.

In one embodiment the high Tg polymer comprises methyl methacrylate (MMA), acrylic acid (AA) and butyl acrylate (BA).

The stabilizer composition can be formulated for desired stability by varying the amounts of the components in the polymer, e.g., by increasing the amount of acrylic acid and/or altering the ratio of methyl methacrylate/butyl acrylate ratio, and by varying the level of polymeric stabilizer. Typically, the ratio of the stabilizer to the core will be from 2 to 90 parts by weight, more typically 5 to 60 parts by weight, even more typically 10 to 40 parts by weight, more preferably from about 10 to about 30 parts by weight.

The pressure sensitive adhesives of the invention may advantageously be used in the manufacture of adhesive articles including, but not limited to, industrial tapes, labels, in particular for bottle labeling applications, and transfer films. The adhesive articles are useful over a wide temperature range and adhere to a wide variety of substrates, including low energy surfaces, such as polyolefins, e.g., polyethylene and polypropylene, polyvinyl fluoride, ethylene vinyl acetate, acetal, polystyrene, powder-coated paints, and the like. Single and double face tapes, as well as supported and unsupported free films are encompassed by the invention. Also included, without limitation, are labels, decals, name plates, decorative and reflective materials, reclosable fasteners, theft prevention and anti-counterfeit devices.

In one embodiment, the adhesive article comprises an adhesive coated on at least one major surface of a backing having a first and second major surface. Useful backing substrates include, but are not limited to paper, foam, metal, fabric, and various polymer films such as polypropylene, polyamide and polyester. In one embodiment of the invention the substrate is foam, e.g., a polyurethane foam. The adhesive may be present on one or both surfaces of the backing. When the adhesive is coated on both surfaces of the backing, the adhesive on each surface can be the same or different.

The adhesives of the invention may be transparent or may be formulated to be transparent and thus may advantageously be used to adhere "no-label" look labels to bottles and jars and the like.

The invention also provides a process for bonding at least a first substrate to at least a second substrate, wherein at least a portion of at least one of said substrates has applied thereon a non-tacky thermally activatable film. The process comprises exposing a non-tacky activatable film that is bonded to at least a portion of a first substrate to thermal energy such that upon exposure of the activatable film to said thermal energy the film develops the properties of a pressure sensitive adhesive and becomes a tacky activated film, bringing a second substrate in contact with the activated film on the first substrate, thereby bonding the first substrate to the second substrate. The first and second substrates may be the same or different. Use of the compositions of the invention enables bonding of different types of substrates such as stainless steel to plastic such as PET since the films adhere to multiple types of surfaces.

Also encompassed by the invention is a process of making a thermally activatable film. The process comprises forming an emulsion of a low Tg hydrophobic polymer and a high Tg hydrophilic stabilizer, coating said emulsion onto a substrate surface and drying to form a film comprising a plurality of hydrophobic polymer cores embedded in a hydrophilic polymer matrix.

As discussed, two or more dispersions comprising particles of hydrophobic core surrounded by a hydrophilic shell, which differ in core and/or shell component may be mixed or blended together and may be used to prepare films. For example, dispersions may be made using polymers comprising different adhesive types as the core component.

In one embodiment activatable compositions which show adhesion to multiple surfaces with greatly dissimilar surface energies are provided. For example, a film may be prepared by blending a dispersion comprising an adhesive that likes high energy surfaces, e.g., an acrylic PSA, and a dispersion comprising an adhesive that likes low energy surfaces, e.g., a rubber based PSA. Upon activation, this film would exhibit patches of both types of adhesive on the surface. It will be appreciated that the actual surface presence could be tuned based on ratios of the adhesives used. This embodiment provides multiple surface adhesion without sacrificing the individual adhesive properties.

In another embodiment composition showing adhesion across a wide temperature range may be prepared using two or more adhesives covering different temperature ranges in the same film.

In yet another embodiment, if different actives interact upon storage or are not otherwise storage stable together, then small amounts of different actives could be encapsulated in different particles. This embodiment finds particular use in adhesives for personal care or delivery applications.

In still another embodiment, compositions that cross-linking after activation may be prepared. In such systems, a two part cross-linking system may be prepared by blending two dispersions, each of which comprises one of the parts. Activation leads to morphology disruption which leads to cross-linking.

The invention is further illustrated by the following non-limiting examples.

### EXAMPLES

### Example 1

Polymeric stabilizer samples A-M having the compositions set forth in Table 1A-1C were synthesized as follows:
Each reaction was conducted in a 5-L round bottom flask equipped with a stainless steel swing banana blade (4") paddle stirrer, a thermometer, a condenser, and addition funnels. The reaction mixture was stirred by an overhead agitator. The reaction was heated by a propylene glycol bath set at the reaction temperature. All reagents slow-additions were regulated using addition funnels. Reaction was carried out at reflux temperature.
Isopropyl alcohol (IPA) was charged to a 5-L flask and heated to reflux while stirring (225 rpm). Reflux started at ~82 °C. After 10 min of reflux, monomer mix containing methyl methacrylate/acrylic acid/butyl acrylate (MMA/AA/BA) and initiator solution of Vazo 67 (2 g) in IPA were slow added simultaneously over 3 and 3.5 h respectively. At the end of the slow addition, reaction mixture was held at reflux for 30 min. After the hold, dean stark trap was attached to the flask and IPA distillation was started. Neutralizer solution of ammonium hydroxide (29.5%) in water was added slowly over 10 min. Solvent stripping was continued until reaction temperature reached 98 °C. During the solvent stripping, viscosity of the mixture increased as IPA was distilled out. To maintain a good mixing hot water was added to the mixture to replace distilled IPA. Reaction was cooled down to room temperature and product was transferred to a jar. By adding more ammonium hydroxide solution, pH was raised to ~9.4. Percent solids, particle size and Tg of these formulations are shown in Tables 1A-1C.

**Table 1A**

| | A | B | C | D | E |
|---|---|---|---|---|---|
| IPA(g) | 151.3 | 151.3 | 151.3 | 151.3 | 151.3 |
| MMA (g) | 90 | 70 | 90 | 80 | 75 |
| AA (g) | 10 | 10 | 10 | 5 | 10 |
| BA (g) | | 20 | | 15 | 15 |
| Styrene (g) | | | | | |
| NH₄OH (g) | 16.46 | 16.46 | 16.46 | 8.23 | 16.46 |
| %Solids | 22.44 | 22.37 | 18.05 | 19 | 18.44 |
| Particle size (nm) | 167.8 | 69.7 | 108.4 | 135.8 | 35.1 |
| Tg (theo.) | 105.1 | 57.2 | 105.1 | 67.92 | 67.96 |

**Table 1B**

| | F | G | H | I |
|---|---|---|---|---|
| IPA(g) | 151.3 | 151.3 | 151.3 | 151.3 |
| MMA (g) | 76.5 | 72.2 | 85 | 90 |
| AA (g) | 10 | 15 | 15 | 10 |
| BA (g) | 13.5 | 12.8 | | |
| (g) | | | | |
| NH₄OH (g) | 16.46 | 24.7 | 24.7 | 16.46 |
| %Solids | 19.18 | 18.51 | 18.3 | 17.19 |
| Particle size (nm) | 69.3 | 226.2 | 303 | 66.1 |
| Tg (theo.) | 72.92 | 80.08 | 105.15 | 105.1 |

**Table 1C**

| | J | K | L | M |
|---|---|---|---|---|
| IPA(g) | 151.3 | 151.3 | 151.3 | 151.3 |
| MMA (g) | 70 | 74.1 | 66.3 | 80 |
| AA(g) | 10 | 5 | | 15 |
| BA(g) | 20 | 20.9 | 18.7 | |
| Styrene (g) | | | | 5 |
| NH₄OH (g) | 16.46 | 8.23 | 24.7 | 24.7 |
| %Solids | 22.39 | 19.15 | 20.64 | 18.71 |
| Particle size (nm) | | 59.5 | | |
| Tg (theo.) | 57.2 | 55.24 | 59.93 | 104.9 |

### Example 2

Polymer emulsion samples were prepared as follows using the components show in Tables 2 and Table 3.

Each reaction was conducted in a 2-L round bottom flask equipped with a stainless steel swing banana blade (4") paddle stirrer, a thermometer, and a condenser. The reaction mixture was stirred by an overhead agitator. The reaction was heated by a water bath set at the reaction temperature. Pre-emulsified monomers were slow added using a metering pump. Initiator slow addition was regulated using addition funnels. Reaction was carried out at 70 °C.

A mixture of water and polymeric stabilizer was charged to a 2-L flask. Nitrogen was purged above surface for 1 h while stirring. Initial charge was heated to 70°C using preheated water. A monomer mix was pre-emulsified with polymeric stabilizer in water. At 70°C, pre-emulsified monomer and sodium persulfate initiator in water were slow added simultaneously and continuously over 1.5 and 2.5 h respectively. At the end of the slow additions, mixture was held for 1.5 h. To convert residual monomers, *t*-BHP shot was added and after 15 min, sodium formaldehyde sulfoxylate (SFS) was slow added over 15 min. Reaction product was held for 30 min at 70 °C and cooled down to room temperature.

**Table 2**

| | Emulsion Samples 1-26 |
|---|---|
| Polymeric Stabilizer Amount (g) | See Table 3 |
| Polymeric Stabilizer ID | See Table 3 |
| NaPS (g) | 0.6 |
| 2-EHA (g) | 72.15 |
| BA (g) | 19 |
| MMA (g) | 7.85 |
| 2-HEA (g) | 1 |

**Table 3**

| Polymer Emulsion Sample | Polymeric Stabilizer Sample | Amount (g) of Polymeric Stabilizer |
|---|---|---|
| 1 | C | 12.68 |
| 2 | C | 20 |
| 3 | C | 30 |
| 4 | C | 20 |
| 5 | A | 20 |
| 6 | B | 20 |
| 7 | I | 10 |
| 8 | I | 30 |
| 9 | I | 19 |
| 10 | G | 10 |
| 11 | G | 30 |
| 12 | J | 10 |
| 13 | J | 20 |
| 14 | J | 30 |
| 15 | H | 10 |
| 16 | H | 30 |
| 17 | H | 20 |
| 18 | F | 10 |
| 19 | F | 20 |
| 20 | F | 30 |
| 21 | K | 20 |
| 22 | K | 30 |
| 23 | L | 10 |
| 24 | L | 30 |
| 25 | H | 20 |
| 26 | M | 20 |

### Example 3

A film was cast from the emulsion sample 14 onto a Polyimide (Upilex 50S from Ube) substrate. An automatic film coater was used to cast the film, using a steel doctor blade with a thickness control of 10 mil. The film was dried at ambient condition for two days. The dry film was clear and crack-free under the ambient drying condition. The final thickness of dry films was 3 mil.

### Example 4

The film made in Example 3 was placed in an oven that was set at different temperature for different periods of time. Ten film samples at each time and temperature were tested for surface tack.

Film surface tack was tested before and after the film was exposed to oven heat. Probe Tack measurement was conducted using Texture Analyzer. The probe was brought into contact with the film at a speed of 0.1 in/min, 450 g force was developed and maintained for 10 seconds to ensure full contact of the probe wit the film, and then the probe was pulled away at 0.2 in/min speed. The maximum force developed during the pulling-away process was recorded as the tack value.

The averages of the 10 measurements at each tested temperature are reported in Table 4.

**Table 4**

| Temperature/time | Average (x=10) Tack (g) |
|---|---|
| Room temperature | 8.5 |
| 70°C /15 minutes | 12.3 |
| 110°C /5 minutes | 59.3 |
| 110°C /30 minutes | 125.6 |
| 135°C/1 minutes | 12.5 |
| 135°C /3 minutes | 119.3 |
| 135°C /5 minutes | 137.1 |
| 135°C /15 minutes | 158.3 |
| 160°C /5 minutes | 156.6 |
| 160°C/30 minutes | 172.0 |

Selected film samples were analyzed by infrared spectroscopy and water contact angle prior to heating and after heating. The water contact angle measurements were compared to those of the polymeric stabilizer and the polymer core component. It was determined that surface energy, as measured by contact angle, changes upon heating. Whereas the water contact angle for the unheated film was closer to the water contact angle measurement of the shell material, the water contact angle for the heated (activated) film was closer to the water contact angle measurement of the polymer core material. This result indicated that the polymer core migrated to the surface upon heating.

### Example 5

Films were made from emulsion sample 14 under the same condition and procedure described in Example 3, except the substrate was a cardboard with a top coating of NIR reflective paper. The film was exposed to energy from a near-IR lamp at full power and at various near-IR exposure times and the surface tack of the film was measured before and after the near-IR exposure by the same method described in Example 3, and the results are summarized in Table 5.

**Table 5**

| Near IR exposure time (sec) | Average (x=3) Tack (g) |
|---|---|
| 0 | 0.9 |
| 1.035 | 1.3 |
| 1.292 | 13.2 |
| 1.724 | 34.1 |
| 2.589 | 201.7 |
| 5.161 | 209.0 |

Carbon black dispersion, as a NIR absorbent, was formulated into emulsion sample 14. Film was then cast the same way as the ones without Carbon Black. The weight percent of Carbon Black was 0.2% and 0.3%. The film was exposed to near-IR energy, and film surface tack was measured under the same condition as the ones without Carbon Black. Average of three measurements is shown in Table 6 (0.2%) and Table 7 (0.3%).

**Table 6**

| Exposure time (sec) | Average (x=3) Tack (g) |
|---|---|
| 0 | 8.8 |
| 0.862 | 217.7 |
| 0.941 | 194.1 |
| 1.035 | 289.0 |
| 1.149 | 249.5 |
| 1.724 | 289.5 |

**Table 7**

| Exposure time (sec) | Average (x=3) Tack (g) |
|---|---|
| 0 | 12.9 |
| 1.035 | 272.1 |
| 1.149 | 341.2 |
| 1.724 | 303.6 |

Many modifications and variations of this invention can be made without departing from its spirit and scope, as will be apparent to those skilled in the art. The specific embodiments described herein are offered by way of example only, and the invention is to be limited only by the terms of the appended claims, along with the full scope of equivalents to which such claims are entitled.

## Claims

1. A composition having a structured first morphology and corresponding first property of interest, where said first morphology and corresponding first property of interest changes to a second morphology and corresponding desired second property of interest upon exposure to an effective amount of thermal energy, and where upon removal of said thermal energy said composition retains said second morphology and corresponding desired second property.

2. The composition of claim 1 wherein said first property of interest and said second property of interest differ in degree of tackiness.

3. The composition of claim 1 which comprises an energy-absorbing agent.

4. The composition of claim 1 wherein said structured first morphology comprises a plurality of hydrophobic cores, each core surrounded by a hydrophilic shell.

5. The composition claim 1 wherein said structured first morphology comprises a plurality of hydrophobic cores embedded in a hydrophilic polymer matrix.

6. The composition of claim 4 wherein said hydrophobic core comprises a low Tg polymer and said hydrophilic shell comprises a high Tg polymer.

7. The composition of claim 4 wherein said core comprises an adhesive.

8. The composition of claim 6 wherein at least a portion of said hydrophobic cores also comprises an active that is released upon exposure to said thermal energy.

9. A composition in the form of a film having a structured first morphology and corresponding first property of interest, wherein said first morphology and first property is changed to a second morphology and corresponding desired second property of interest upon exposure to an effective amount of thermal energy, and where upon removal of said thermal energy said composition retains said second morphology and corresponding desired second property.

10. The composition of claim 9 wherein at least one surface of the film exhibits pressure sensitive adhesive properties only after exposure to said thermal energy.

11. The composition of claim 9 wherein said structured first morphology comprises a plurality of hydrophobic cores embedded in a hydrophilic polymer matrix.

12. The composition of claim 11 wherein said hydrophobic core comprises a low Tg polymer and said hydrophilic polymer matrix comprises a high Tg polymer.

13. The composition of claim 11 wherein said core is an adhesive.

14. The composition of claim 9 comprising an energy-absorbing agent.

15. The composition of claim 11 wherein at least a portion of said hydrophobic core also comprises an active that is released upon exposure to said thermal energy.

16. A process for bonding at least a first substrate to at least a second substrate, wherein at least a portion of at least one of said substrates has applied thereon a non-tacky thermally activatable film, said process comprising:
exposing a non-tacky activatable film that is bonded to at least a portion of a first substrate to thermal energy such that upon exposure of the activatable film to said thermal energy the film is activated to become tacky, the activated tacky film remaining tacky upon removal of thermal energy and at temperatures where the activatable film was nontacky, and
bringing a second substrate in contact with the activated tacky film on the first substrate, thereby bonding the first substrate to the second substrate.

17. The process of claim 16 wherein said activatable film has a structured first morphology and corresponding first property of interest, wherein said first morphology and first property are altered by said exposure to thermal energy, which exposure leads to activation of said film, which activated film has a second morphology and corresponding desired second property of interest.

18. A process of making a thermally activatable film comprising forming an emulsion of a low Tg hydrophobic polymer and a high Tg hydrophilic polymeric stabilizer, coating said emulsion onto a substrate surface and drying to form a film comprising a plurality of hydrophobic cores embedded in a hydrophilic polymer matrix.

19. An article of manufacture comprising the composition of claim 1.

20. An article of manufacture comprising the composition of claim 9.

21. The article of claim 19 which is non-tacky label, film or tape which becomes a pressure sensitive adhesive label, film or tape upon exposure to thermal energy.

22. An article of manufacture prepared by the method of claim 18, wherein a blend of at least two different emulsions are coated onto a substrate, said article exhibiting at least two distinct properties when activated with thermal energy.
